(19) Europäisches Patentamt / European Patent Office / Office européen des brevets

(11) **EP 3 607 300 B1**

(12) **EUROPEAN PATENT SPECIFICATION**

(45) Date of publication and mention
of the grant of the patent:
**28.04.2021 Bulletin 2021/17**

(21) Application number: **18720006.8**

(22) Date of filing: **29.03.2018**

(51) Int Cl.:
***G01N 19/02*** *(2006.01)*

(86) International application number:
**PCT/IB2018/052196**

(87) International publication number:
**WO 2018/185625 (11.10.2018 Gazette 2018/41)**

(54) **A PROBE FOR THE MEASUREMENT OF TRIBOLOGICAL PROPERTIES**

SONDE ZUR MESSUNG VON TRIBOLOGISCHEN EIGENSCHAFTEN

SONDE POUR LA MESURE DE PROPRIÉTÉS TRIBOLOGIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.04.2017 IT 201700038829**

(43) Date of publication of application:
**12.02.2020 Bulletin 2020/07**

(73) Proprietor: **Istituto Nazionale di Ricerca
Metrologica
(I.N.RI.M.)
10135 Torino (IT)**

(72) Inventors:
• **ROSSO, Lucia
10135 Torino (IT)**
• **FERNICOLA, Vito
10135 Torino (IT)**

• **TABANDEH, Shahin
10135 Torino (IT)**

(74) Representative: **Crovini, Giorgio
Buzzi, Notaro & Antonielli d'Oulx S.p.A.
Corso Vittorio Emanuele II, 6
10123 Torino (IT)**

(56) References cited:
**WO-A1-97/03346 FR-A1- 2 849 185**

• **ROSSO L ET AL: "Multi-channel Optical Fiber
Thermometer for PEM Fuel-Cell Applications",
INTERNATIONAL JOURNAL OF
THERMOPHYSICS ; JOURNAL OF
THERMOPHYSICAL PROPERTIES AND
THERMOPHYSICS AND ITS APPLICATIONS,
KLUWER ACADEMIC
PUBLISHERS-CONSULTANTS BUREAU, NE, vol.
32, no. 7 - 8, 28 April 2011 (2011-04-28), pages
1440-1447, XP019942647, ISSN: 1572-9567, DOI:
10.1007/S10765-011-0976-0**

EP 3 607 300 B1

**Description**

<u>Technical field</u>

The present disclosure relates to techniques for measuring tribological properties, in which it is provided to use a probe for measuring tribological properties of materials, the probe comprising a punch, which includes a supporting body associated to a sliding end portion configured for sliding over the surface of a material under test, said probe being associated to a detection device, which supplies at output a quantity that is a function of the temperature of an interface between the sliding end portion and the surface of a material under test.

The invention has been developed with particular attention paid to the possible application thereof in PoD (Pin-on-Disk) technologies.

For simplicity of illustration, in the sequel of the present description practically constant reference will be made to the above possible field of application. It will on the other hand be appreciated that the scope of the invention is altogether general and hence not limited to this specific context of application.

Various embodiments may be applied also to techniques that provides sliding with linear reciprocating motion.

<u>Technological background</u>

Techniques for measuring tribological properties are important for the development of engineered surfaces. Engineering of surfaces entails a complete knowledge of the materials at different levels of scale, i.e., of their macroscopic properties, such as hardness, elasticity, conductivity, friction, wear-resistance, as well as, at a lower scale, at an atomic level, of properties such as bonds, adhesion, properties of corrosion, and electronic properties. In particular, the durability and performance of many engineered products and devices depend in a critical way upon the tribological properties of the surfaces, such as friction and wear.

There are hence known techniques for measuring tribological properties of materials, such as friction and wear, that employ measuring apparatuses known as tribometers.

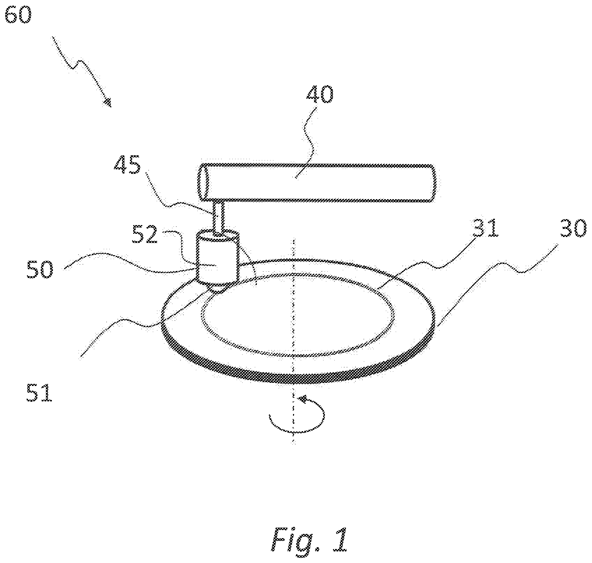

A standard technique used for investigating into the above properties employs a so-called Pin-on-Disk (PoD) tribometer apparatus. The Pin-on-Disk technique is described in the ASTM G99 standard, and with reference to Figure 1, which shows as a whole a tribometer apparatus 60 for measuring tribological properties of a known type, provides setting a rotary disk 30 made of material that is to undergo measurement in contact with a fixed probe 50, having a punch structure formed by a support 52 and an end portion 51, which may be shaped like a pin (hence the name of the technique), or else may be hemispherical, or else even flat.

The probe 50 is mounted on a positioning arm 40 through a load cell 45 that serves to measure both the weight force applied by the punch represented by the probe 50 on the surface of the rotary disk 30 and the deflection of the punch structure as a result of friction on the disk 30. The positioning arm 40 sets the probe 50 at different radial distances to form circular traces of wear 31 as a consequence of sliding of the end portion 51 over the disk 30. The sliding end portion 51 is made of hard materials, such as hardened steel or sapphire.

An equivalent technique, based upon a linear reciprocating translation of the end portion 51 (ASTM G133 standard), or pin, on the surface being tested, investigates the same properties, in particular in a different range of speed.

During the experiments conducted with the PoD apparatus, the grazing friction between the end portion and the disk causes wear on both of the surfaces in contact. It is deemed that the temperature between the interfaces of wear has a major effect on the tribological performance. Consequently, tribometers are known where the probe is associated to a detection device, which supplies at output a quantity that is a function of the temperature of an interface between the sliding end portion and the surface of the material under test, namely, a device that operates as detector of temperature of the aforesaid interface, so that the temperature can be acquired as datum associated to the tribological tests.

However, the use of conventional temperature sensors, such as thermistors located in the proximity of the tip of the end portion, does not enable an accurate measurement of the temperature that is set up specifically at the interfaces of wear, i.e., between the sliding end portion and the surface of the material being tested

Document WO 97/03346 A1 relates to a probe for optically measuring tribological properties of materials. ROSSO L ET AL: "Multi-channel Optical Fiber Thermometer for PEM Fuel-Cell Applications",INTERNATIONAL JOURNAL OF THERMOPHYSICS ; JOURNAL OF THERMOPHYSICAL PROPERTIES AND THERMOPHYSICS AND ITS APPLICATIONS, KLUWER ACADEMIC PUBLISHERS-CONSULTANTS BUREAU, NE, vol. 32, no. 7 - 8, 28 April 2011 (2011-04-28), pages 1440-1447, relates to an optical fluorescent thermometer using an optical fiber having a fluorescent temperature sensitive tip. FR 2 849 185 A1 relates to a probe for friction measurement on a surface which is equipped with a thermometer at its tip.

Object and summary

The object of the embodiments described herein is to improve the potential of the techniques according to the prior art, as discussed previously.

Various embodiments achieve the above object thanks to a probe having the characteristics recalled in the ensuing claims. Various embodiments may also refer to corresponding apparatuses for measuring tribological properties, as likewise may refer to a method for measuring tribological properties.

The claims form an integral part of the technical teachings provided herein in relation to the invention.

Brief description of the drawings

Various embodiments will now be described, purely by way of example, with reference to the annexed drawings, in which:

- Figure 1 has already been described previously;
- Figure 2 is a schematic illustration of an apparatus that uses a probe for measuring tribological properties;
- Figure 3 is a detailed schematic view of a probe for measuring tribological properties;
- Figure 4 shows a diagram representing quantities used by the apparatus of Figure 1;
- Figure 5 shows a diagram representing quantities measured by the apparatus of Figure 3; and
- Figure 6 presents a diagram of an artificial neural network developed for processing and converting experimental values of quantities measured by the probe of the apparatus of the previous figures.

Detailed description

In the ensuing description numerous specific details are provided in order to enable maximum understanding of the embodiments provided by way of example. The embodiments may be implemented with or without specific details, or else with other methods, components, materials, etc. In other circumstances, structures, materials, or operations that are well known are not illustrated or described in detail so that aspects of the embodiments will not be obscured. Reference, in the course of the present description, to "an embodiment" or "one embodiment" is meant to indicate that a particular structure, peculiarity, or characteristic described in relation with the embodiment is comprised in at least one embodiment. Hence, phrases such as "in an embodiment" or "in one embodiment" or the like that may be present in various points of this description do not necessarily refer to one and the same embodiment. Moreover, the details, peculiarities, structures, or characteristics may be combined in any convenient way in one or more embodiments.

The references are provided herein merely for convenience of the reader and do not define the scope or meaning of the embodiments.

The probe described herein according to the invention basically provides that the sliding portion of the probe, which is configured for contacting the surface of the material that is to undergo measurement, is totally or partially made of fluorescent material. Moreover, the above sliding portion, i.e., the so-called pin, is associated in the probe to a detection device, which supplies at output a quantity that is a function of the temperature of the interface between the sliding end portion and the surface of a material under test and comprises means, in particular an optical fibre, for conveying, into the aforesaid sliding portion, a radiation that is able to excite a fluorescence response by the sliding portion itself, in particular a laser radiation. In addition, the aforesaid device is associated in the probe to means, in particular the optical fibre itself, configured for collecting said fluorescence response and conveying it to detection means, such as a photodetector. In general, of course, the detection device, which supplies at output a quantity that is a function of the temperature of the interface between the sliding end portion and the surface of a material under test, also comprises the sliding portion made of fluorescent material as sensitive element.

According to a preferred embodiment, the above fluorescent material is ruby, or chromium-doped sapphire.

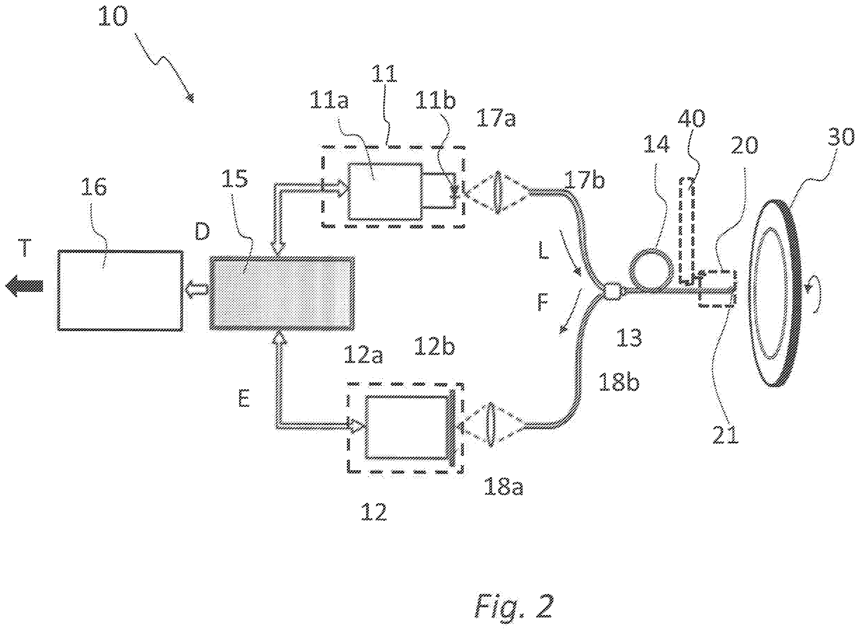

Represented in Figure 2 is an apparatus 10 for measuring the tribological properties of a material.

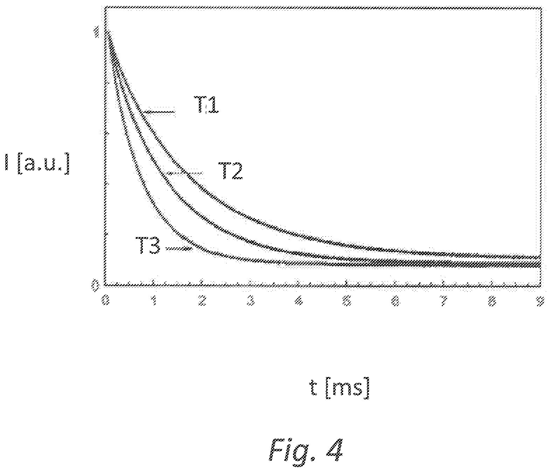

Designated by 20 is a probe for measuring tribological properties, which, like the probe 50 of Figure 1, is mounted on an arm 40 (represented with a dashed line in Figure 2) via a load cell, and comprises a sliding portion 21, which comes into contact with the rotary disk 30 made of the material that is to be tested. For measurement of the tribological properties, such as wear and friction, the apparatus 10 is structured and operates substantially like the apparatus 60 of Figure 1. However, even though the probe 20 has substantially similar mechanical characteristics as regards the structure of the punch probe, it comprises a sliding end portion, which, in the example, is entirely made of fluorescent material, specifically a crystal of chromium-doped sapphire. The apparatus 10 for measuring the tribological properties is configured for exciting, via a laser radiation L, a fluorescence response F by the aforesaid sliding portion 21 and for collecting the fluorescence response F. The apparatus 10 is configured for calculating, from the fluorescence response F, a temperature $T_p$ of the sliding portion 21 on the basis of the lifetime of the fluorescence response F in the sliding portion 21, as described in greater detail with reference to Figure 4.

Hence, the apparatus for measuring the tribological properties 10 comprises a laser source 11, which includes a laser driver 11a, which drives a laser diode 11b that emits the laser radiation L.

Emission of fluorescence by the chromium-doped sapphire takes place at approximately 690 nm, which derives from the high absorption of light with maxima at approximately 410 nm and 550 nm. Consequently, for example, an efficient pumping of the sliding portion 21 is obtained with a laser radiation L at 405 nm. The laser source 11 is configured for modulating the radiation L according to square-wave pulses. The laser radiation L is focused, via a focusing lens 17a, in a first, outward, optical-fibre branch 17b connected to a 1 x 2 fibre coupler 13. The coupler 13 conveys the laser radiation L into a common stretch of optical fibre 14, which is connected to the probe 20. Moreover, the common stretch of optical fibre 14 collects and conveys the fluorescence response F to the coupler 13. The coupler 13 sends the fluorescence response F on a second, return, optical-fibre branch 18b, which is connected to the coupler and which, through a focusing lens 18a, sends the fluorescent-response signal F, which presents an exponential evolution decreasing in time after excitation by the laser radiation L has ceased, to a photodetector module 12, which comprises a filter 12b and a photodiode 12a, in particular a p-i-n silicon photodiode, which converts the optical signal of the fluorescence response F into an electrical fluorescence signal E. This electrical fluorescence signal E is acquired by an acquisition module 15, which comprises an analog-to-digital converter; in the example, it is in, particular, sampled once every microsecond and converted, by a 16-bit analog-to-digital converter, into fluorescence measurement data D, which are sent to a computer 16, which is interfaced with the acquisition module 15 and is configured for carrying out processing and supplying, starting from the fluorescence measurement data D that represent the time plot of the fluorescence of the sliding portion 21, the value of temperature $T_p$ of the sliding portion 21.

In this regard, with reference to the diagram of Figure 4, which shows the intensity $I$ of the fluorescence response F as a function of time t, the fluorescent lifetime presents a variation as a function of temperature that is characteristic for each fluorescent material. Figure 4 shows the decay of the chromium-doped sapphire used for the sliding portion 21 at three different temperatures, T1 = 25°C, T2 = 80°C, T3 = 100°C.

The computer 16 is configured for converting the fluorescent lifetime into a temperature by means of a pre-set calibration curve, obtained via a separate measurement of the relation between the fluorescent lifetime and the temperature for the sliding portion 21.

More in particular, the fluorescence response F to a pulsed light excitation, namely, the laser radiation L, is acquired by sampling the transient decay curve in a given time window $\Delta t$, after excitation by the laser radiation L has ceased. The time window $\Delta t$ preferably has an amplitude corresponding to multiples of the decay time constant $\tau$, for example five times $\tau$.

As has been said, the fluorescence response F is substantially a fluorescence signal as a function of time, f(t), which may be single with an exponential decay in the following form

$$f(t) = A \exp(- t / \tau) + B$$

where $\tau$ is the decay time constant, A is the amplitude of the fluorescence response F at time zero, and B is an offset value, deriving from background noise.

After the fluorescence signal as a function of time f(t) has been sampled by the acquisition module 15, it is processed by the computer 16, which applies the Fourier transform, to obtain a transformed fluorescence signal F ($\omega$) in the domain of the frequencies $\omega$

$$F(\omega) = \Im[A \exp(- t / \tau)] = \frac{A}{1/\tau + j\omega} + B\delta(\omega)$$

From the above relation the parameter $\beta$ is obtained, which is equal to the inverse of the decay time constant $\tau$ and is defined as

$$\beta = \frac{1}{\tau} = \frac{\omega \cdot Re[F(\omega)]}{Im[F(\omega)]}$$

i.e., the parameter $\beta$ is a function of the tangent of the phase angle of the transformed fluorescence signal F ($\omega$) .

It should be noted that, in effect, when the Fast Fourier transform (FFT) is applied to a function f (t) sampled in a number N of points, as in the case in question, in order to take into account the effect of discrete sampling of the signal and hence be able to estimate correctly the fluorescence decay time $\tau$, it is necessary to use the following relation:

$$\beta = \frac{1}{\tau} = \frac{1}{\Delta t} \ln\left(\frac{\mathrm{Re}[\mathrm{FFT}(\omega_i)]}{\mathrm{Im}[\mathrm{FFT}(\omega_i)]} \cdot \sin(\omega_i \Delta t) + \cos(\omega_i \Delta t)\right)$$

where $\omega_i$ is any i-th nonzero frequency given by

$$\omega_i = \frac{2\pi \cdot i}{N \cdot \Delta t}$$

where N is the number of the samples of the FFT and $\Delta t$ is the acquisition time window.

Hence, in a first general embodiment, the probe 20 and the apparatus 10 may be used in a method that comprises the following operations:

- driving sliding of the sliding portion 21 over the surface 30 of the material;
- acquiring values of deflection of the probe 20, which are due to friction and are measured by the apparatus 10, in particular via a load cell 45;
- controlling the laser source 11 so that it will send a series of laser-radiation pulses L through the probe 20;
- acquiring from the probe 20 the fluorescence response F;
- processing the fluorescence response F to obtain a fluorescent decay time $\tau$;
- calculating from the fluorescent decay time $\tau$ obtained a corresponding temperature $T_p$ of the sliding portion 21, to which the fluorescent decay time $\tau$ is associated.

The temperature $T_p$ of the sliding portion 21 can be used as measurement of the temperature of the interface between the sliding end portion 21 and the surface of the material under test 30. As described in what follows, the apparatus 10 disclosed herein can operate, in variant embodiments, to obtain a more precise measurement of the temperature of the interface between the sliding end portion 21 and the surface of the material under test 30.

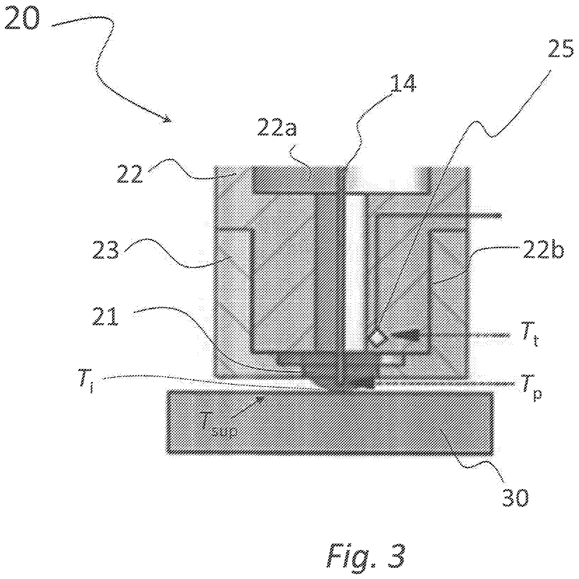

In this regard, illustrated in Figure 3 is a detailed diagram of the probe 20, which represents a cross section according to a vertical plane of the aforesaid probe.

The probe 20 comprises a support 22 in the form of a cylindrical body, provided within which is an axial channel 22a, inserted in which is a terminal part of the common optical-fibre branch 14 associated to the coupler 13 in Figure 2.

Set on the bottom surface of the support 22, in a position corresponding to the outlet of the axial channel 22a and of the terminal part of the optical fibre 14, is the sliding portion 21, which comprises a hemisphere of chromium-doped sapphire, the spherical part of which is set in contact with a surface 30 to be measured, in particular, as has been said, the surface of a rotary disk.

The sliding portion 21 is fixed to the support 22 via a cap 23, i.e., a circular ring nut, which has at its centre an opening with a diameter slightly smaller than that of the sliding portion 21, so as to withhold it, and which can be screwed on a bottom threaded portion 22b of the support 22.

As has been said, once the value of fluorescent time constant r has been obtained, it is converted into a temperature value $T_p$ using a pre-set curve obtained via a separate calibration procedure. This procedure has the purpose of determining how the fluorescent decay time r varies for a specific material as a function of temperature. Calibration is normally performed by immersion; i.e., the fluorescent material (the sliding portion or pin 21, in this case) is put in an oven, the temperature of which is accurately measured using a reference platinum resistance thermometer, and, for a series of values of temperature in the oven, the corresponding value of fluorescent decay time $\tau$ is recorded.

Calibration by immersion of a surface-temperature sensor presents, however, some limits linked to the fact that the calibration condition (in a bath in the absence of external perturbations) differs from the effective conditions of use of the sensor. In fact, when a measurement of surface temperature is made using a contact probe, such as the probe 20, and the temperature sensor is rested on the surface under test, for example the surface of the rotary disk 30, the very presence of the probe on the surface alters the pre-existing thermal field; consequently, the temperature value measured by the probe is affected by the following errors, which must be taken into account:

- a first error E1 due to the effect of loading by the contact probe; this effect causes a convergence of the lines of thermal flux towards the area of contact and results in a local perturbation of the surface temperature;
- a second error E2 due to the contact resistance at the interface between the probe and the surface; and
- a third error E3 due to the difference in temperature between the surface of the object under test and the sensitive point of the temperature probe.

The above errors E1, E2, E3 regard the case of static measurements of temperature, where, that is, the probe is in contact with the surface to be measured but stationary with respect thereto. In this case, the probe measures the temperature of the surface. In the case of the probe 20 for measuring tribological properties described herein, the probe slides on the surface itself of the disk 30; i.e., it is a dynamic case. Consequently, there is a grazing friction between the end portion 21 of the probe 20 and the surface of the disk 30, and hence generation of heat, which determines a marked increase in the temperature around the point of contact (wear interface, where the circular traces of wear 31 are formed). Hence, in this case, the probe 20 moving over the surface of the disk 30 measures the temperature that is generated at the wear interface.

In this case, the mechanical coupling between the probe and the surface and the internal generation of heat due to friction at the interface between them means that the effect of loading of the probe as also the contact thermal resistance, which are responsible for the first error E1 and for the second error E2, respectively, in the static case, will be practically negligible. The third error E3, instead, cannot be neglected either in the static case or in the dynamic case and hence must be appropriately assessed also for the probe 20 described herein.

From what has been said above, if it is desired to use the probe 20 described in tribological applications for measuring the temperature at the interface between the pin 21 and the surface 30, it is necessary to develop a method for real-time compensation of the measurement error.

In this regard, it is possible to proceed as follows. It is provided to draw up, for example in the computer 16 but also in some other computing means, a finite-element model (FEM) to evaluate the thermal flux along the probe 20, specifically along the portion 21, and the consequent vertical temperature gradient, i.e., along the axis that joins the portion 21 to the disk 30. To measure experimentally the thermal flux a thermistor 25 is inserted in the cylindrical support 22 of the probe 20, as may be seen in Figure 3. Through the fluorescence response F, the temperature of the pin $T_p$ is measured, whilst by means of the thermistor 25 a further temperature $T_t$ is measured, which can be used for evaluating the thermal flux through the probe 20 (as function of the temperature difference $T_p$ - $T_t$).

It is then provided to apply the aforesaid finite-element model in the context of a tuning operation for different boundary conditions, i.e., for different combinations of values of surface temperature $T_{sup}$, temperature of the thermistor $T_t$, and temperature of the pin $T_p$, measured experimentally using detection devices of the apparatus 10, i.e., the fluorescence response F for the temperature of the pin, the variation of resistance of the thermistor 25 for the temperature of the thermistor $T_t$, and a temperature sensor set on the disk 30, for example another thermistor, for the surface temperature $T_{sup}$, as illustrated in Figure 3, which is the temperature of the surface of the disk 30, i.e., of the material under test. The value of the surface temperature $T_{sup}$ is available in the apparatus described herein in so far as it is normally determined in apparatuses for measuring tribological properties, in a way in itself known to the person skilled in the sector, in particular via platinum-resistance thermometers in the block that supports the disk 30 and linear extrapolation of the temperature on the surface. The thermistor 25 is preferably positioned in the proximity of the bottom end of the support 22 and hence in the proximity of the base, or plane surface, of the sliding portion or pin 21.

Once tuning of the finite-element model has been carried out so that this will describe faithfully the physical reality, the finite-element model itself is used for creating a database for training a neural network; namely, the FEM is used to obtain a training set of inputs and outputs for the neural network.

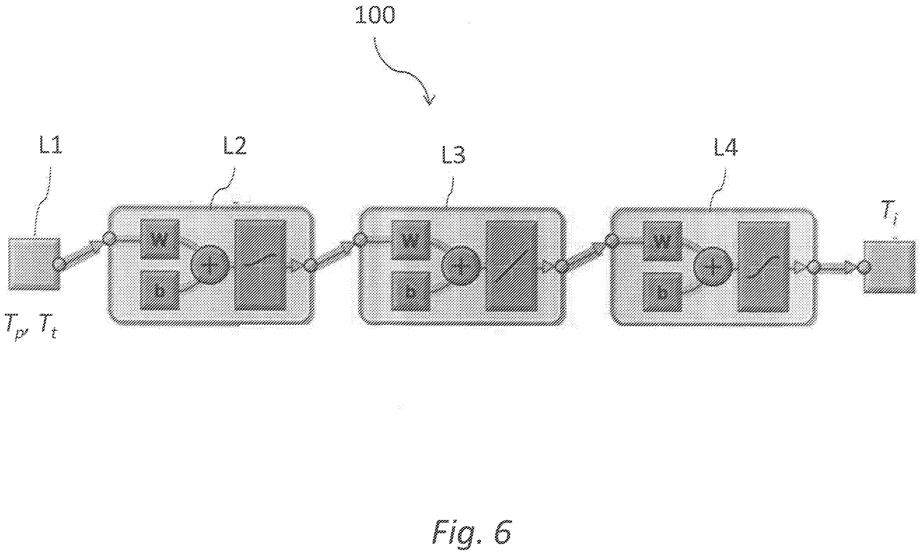

It is provided, in fact, for calculating a temperature of the interface compensated for the measurement error, to use an artificial neural network (ANN) with four layers, namely, an input layer L1 having two nodes, two hidden layers L2 and L3 having four nodes, and an output layer L4 having one node, the ANN being illustrated in Figure 6 and designated as a whole by the reference number 100. In the case in point, the input layer L1 must have a number of nodes equal to the number of the input quantities, i.e., two nodes, one for the temperature of the thermistor $T_t$ and one for the temperature of the pin $T_p$, whereas the output layer L4 must have a number of nodes equal to the number of the output quantities, i.e., just one node for a contact temperature $T_i$ compensated for the measurement error, as described more fully in what follows. The number of nodes for each of the hidden layers L2 and L3 is instead arbitrary and in this case is four.

The neural network 100 is trained using the database, i.e., the training set, of the aforementioned inputs and outputs of the neural network, which has previously been created using the FEM, as described above, and using the Levenberg-Marquardt's back-propagation algorithm.

When the probe 20 is used during a tribological test, the two quantities measured by the probe 20, temperature of the pin $T_p$, and temperature of the thermistor $T_t$, constitute the input data of the neural network 100, which processes them, supplying at output in real time the estimate of the measurand, i.e., the aforementioned contact temperature $T_i$ at the interface between the pin 21 and the surface, i.e., the surface of the disk 30, corrected (compensated) for the measurement error, for example the third error E3.

In greater detail, in the measurement step, the acquisition module 15, in addition to generating the laser-activation signal, acquires in the measurement data D the fluorescence signal from the photodetector module 12 and also the value of resistance supplied by the thermistor 25. The computer 16 processes the values in the measurement data D supplied by the acquisition module 15 and supplies, respectively, the temperature $T_p$ of the sliding portion 21, by processing the fluorescence response F, and the temperature of the thermistor $T_t$, by processing the resistance of the thermistor 25 in a way in itself known to the person skilled in the sector. Next, it supplies the temperature $T_p$ of the

sliding portion 21, and the temperature of the thermistor $T_t$ to the neural network 100, which supplies the contact temperature $T_i$ compensated for the measurement error.

As already mentioned, the mechanical structure of the probe 20 in general corresponds to that of probes used in known PoD apparatuses, like the apparatus 60 of Figure 1, with which it is mechanically interchangeable; however, instead of the sliding portion made of sapphire, a portion 21 is used, made of fluorescent chromium-doped sapphire, which enables measurement of temperature *in situ* and in real time at the wear interface.

In general, the sliding portion or pin 21 must be made of a hard material, but with temperature-sensitive fluorescence response. Various materials may potentially be used for providing the pin 21, amongst which:

- doped crystalline materials such as ruby and alexandrite or garnets, as the YAG, activated with ions of the group of the rare earths or with transition metals such as europium, thulium, neodymium, etc.; and
- doped ceramic materials (such as sulphates and lanthanum or yttrium oxides activated with europium).

Ruby obtained from sapphire doped with chromium ions advantageously presents a hardness equal to that of sapphire, but in a fluorescent crystal. Another advantageous aspect of ruby is that its fluorescent lifetime is monotonic as a function of temperature and is moreover of the order of some milliseconds, i.e., sufficiently long as to enable accurate measurement thereof with high-speed signal-processing electronics, such as the acquisition means 15 described.

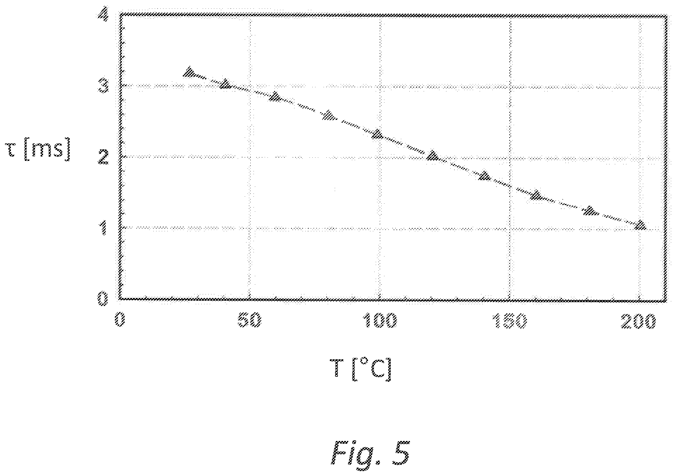

Figure 5 shows the plot of the lifetime of ruby as a function temperature in the range between 20°C and 200°C, obtained by means of calibration by immersion in an oven. This plot shows, as has been said, a monotonic behaviour, with an experimental mean sensitivity of approximately 10 µs/°C. The repeatability in temperature thereof is hence higher than 0.1°C.

The sliding portion 21, in the example, is made up of a hemisphere of ruby having a diameter of 6 mm, coupled to an optical fibre 14a having a diameter of 400 µm. In the sliding portion 21, on the plane surface of the hemisphere, opposite to the convex surface of contact with the material 30, a blind hole is present having a diameter greater than 500 µm, perpendicular to the above plane surface, configured for housing one end of the fibre 14, which conveys the laser radiation L and at the same time collects the fluorescence response F of the sliding portion 21.

The part of the portion 21 between the output of the fibre 14 and the surface of the ruby that contacts the surface 30 is very thin, in particular less than 500 µm, in such a way that the temperature measured will be as close as possible to the temperature at the interface $T_i$, i.e., the measurand.

The cylindrical portion 22 has, in the example described, an outer diameter of 20 mm and a height of 36 mm. Alignment between the optical fibre 14 and the sliding portion 21 is obtained via a standard ST connector set on the top surface of the support 22.

The apparatus described may be made in a compact way in so far as the modules for excitation and detection of fluorescence may also be mounted on supports of small dimensions, for example, a board of 300 mm x 300 mm directly connected via the optical fibre 14 to the probe 20 and via an interface cable to the computer 15 that derives the temperature data $T_p$ from the decay of the fluorescence.

The cylindrical support 22 is preferably made of stainless steel, whereas the screw-on cap 23 is preferably made of brass.

In variant embodiments, to reduce the thermal losses by conduction between the sliding portion 21 made of ruby and the cylindrical support 22, thus minimising the measurement error on the temperature at the contact interface, the cylindrical support 22 may be made of a polymer, for example Murlubric®, which has a thermal conductivity much lower than that of stainless steel.

Hence, the apparatus 10 comprises the probe 20 for tribological measurements, which comprises, as has been said, means for measuring the temperature at the wear interface during tribological testing. The above probe 20 is hence suited for operating as probe in a tribometer, i.e., an apparatus, like the one described in Figure 1, which comprises means, such as the arm 40 and the cell 45 for setting the probe 20 in contact with the surface 30 of the material to be measured, with a given force, and means, in particular once again the cell, for measuring a deflection of the probe 20 during sliding so as to derive, for example, the coefficient of friction, where in particular the sliding end portion 21 is partially or totally made of fluorescent material, whereas the probe 20 further comprises both optical means, the optical fibre 14, for conveying a laser excitation radiation L into the sliding end portion 21 and for collecting the fluorescence response F of said sliding end portion 21, and optical means, in particular once again the fibre 14, for collecting the fluorescence response F and conveying it to optical detection means, such as the photodetector 12.

In addition to the above probe, the apparatus 10 is provided with the laser source 11 for emitting the laser excitation radiation L, in addition to the optical-coupling means, such as the lens 17a, the fibre 17b, and the coupler 13, for coupling the excitation radiation with the probe 20, in particular with the optical fibre 14, and the photodetector module 12 for detecting the fluorescence response F, thereby generating a corresponding electrical signal E, in addition to, also in this case, the optical coupling means, the lens 18a, the fibre 18b, and the coupler 13 itself, for coupling the photodetector module with the probe 20, in particular with the fibre 14 for collecting and conveying the aforesaid fluorescence response F. The apparatus 10 is also provided with a module 15, which acquires both the values E measured by the photodetector module 12 and the value of resistance measured by the thermistor 25, thereby generating acquired data D. These data D are processed by the processing module or computer 16 to obtain two values of temperature supplied by the probe (temperature of the pin $T_p$, and temperature of the thermistor $T_t$) and, from these, through the neural network, the contact temperature at the pin/surface interface $T_i$ corrected (compensated) for the measurement error.

In the above context, the apparatus 10 for measuring tribological properties is configured for implementing, for example, a method comprising the following operations:

- driving, for example via the rotary disk 30 made of the material to be tested, sliding of the sliding portion 21 over the surface 30 of the material; of course, this operation may be controlled by driving the actuators of the rotary disk via the processing module 15 itself, or else via some other computer;
- acquiring, for example via the processing module 15, the values of deflection of the probe 20, due to friction and measured by the load cell 45;
- controlling the laser source 11 so that it will send a series of laser-radiation pulses L through the probe 20;
- acquiring the fluorescence response F through the probe 20, the photodiode 12, and the acquisition module 15; this in general is made after the laser source 11 has been stopped;
- acquiring, through the acquisition module 15, the value of resistance supplied by the thermistor 25 inserted in the cylindrical support 22 of the probe 20;
- processing the fluorescence response F to obtain a fluorescent decay time $\tau$;
- calculating, from the fluorescent decay time $\tau$ obtained, the corresponding temperature $T_p$ of the sliding portion 21 to which the aforesaid fluorescent decay time $\tau$ is associated; this calculation is preferably made as a function of a pre-set calibration curve, which is, for example, stored in the processing module 15; this pre-set calibration curve is obtained preferably in a separate way, via a calibration procedure by immersion of the probe 20 in an oven;
- calculating, starting from the value of resistance measured by the thermistor 25, the corresponding temperature $T_t$ by means of the pre-set calibration curve of the thermistor stored in the processing module; and
- processing the values of temperature measured by the probe (temperature of the pin $T_p$, and temperature of the thermistor $T_t$) by means of the neural network 100 to obtain at output in real time the contact temperature at the pin/surface interface $T_i$ corrected (compensated) for the measurement error.

It is clear that the method may comprise other operations carried out by a tribometer, such as evaluation of the wear of the wear path 31 that is formed during sliding with a given force.

Hence, from the foregoing, the advantages of the technique described emerge clearly.

The probe, the apparatus, and the method described hence make it possible to carry out tribological measurements on materials to be tested, obtaining, via the use of a pin that contains a fluorescent part, an estimate of the temperature at the wear interface. In particular, via the use of an additional thermistor and of a neural network, it is possible to obtain an estimate, substantially *in situ* and in real time, of the temperature at the interface of contact between the probe and the material under test.

The devices necessary for excitation and detection of the fluorescence are advantageously of very contained dimensions. Moreover, the probe, as compared to a conventional probe for measurements of tribological properties, for example for PoD measurements, presents modifications that do not affect the dimensions of the probe so that the probe according to the invention is interchangeable with conventional probes. As a whole, the small size of the sensing and excitation devices, together with the retro-compatibility of the modified probe, enables easy adaptation of known apparatuses for measuring tribological properties to obtain the apparatus described herein.

Of course, without prejudice to the principle of the invention, the details and the embodiments may vary, even significantly, with respect to what has been described herein purely by way of example, without thereby departing from the sphere of protection thereof, which is defined by the annexed claims.

The sliding portion may be made entirely of fluorescent material, even though falling within the sphere of protection of the present invention are also sliding portions that are at least in part made of fluorescent material; i.e., they also comprise non-fluorescent parts.

**Claims**

1. A probe (20) for measuring tribological properties of materials, comprising a punch, which includes a supporting body (22) associated to a sliding end portion (21) configured for sliding over the surface (30) of a material under test, said probe comprising a detection device, which supplies at output a quantity (F) that is a function of the temperature ($T_i$) of an interface between the sliding end portion (21) and the surface (30) of a material under test, said probe being **characterized in that**:

said sliding end portion (21) configured for sliding over the surface (30) of a material under test is partially or totally made of fluorescent material,

the detection device, which supplies at output a quantity (F) that is a function of the temperature ($T_i$) of an interface between the sliding end portion (21) and the surface (30) of a material under test and comprises optical means (14) for conveying, into said sliding end portion (21), a radiation (L) that is able to excite a fluorescence response (F) of said sliding end portion (21), in particular a laser radiation, and

the probe further comprises optical means (14) for collecting said fluorescence response (F) and conveying it to optical means (12) for detecting said fluorescence response (F) .

2. The probe according to Claim 1, **characterized in that** said fluorescent material is ruby.

3. The probe according to Claim 1 or Claim 2, **characterized in that** said optical means (14) for conveying said excitation radiation (L) and said optical means (14) for collecting said fluorescence response (F) and conveying it to said optical detection means (12) comprise one and the same optical fibre, which is positioned within the supporting body (22) and one end of which is inserted in the sliding portion (21) .

4. The probe according to any one of the preceding claims, **characterized in that** it comprises a temperature sensor (25), in particular a thermistor, positioned in the proximity of said sliding portion (21) .

5. An apparatus Z (10) for measuring tribological properties of materials, comprising a probe according to any one of Claims 1 to 4, **characterized in that** it comprises:

a laser source (11) for emitting said excitation radiation (L) and optical-coupling means (17a, 17b, 13) for coupling said excitation radiation (L) to said conveying means (14) of said probe (20), and

a photodetector module (12) for detecting said fluorescence response (F) and optical coupling means (18a, 18b, 13) for coupling said photodetector module (12) to said optical means (14) for collecting and conveying said fluorescence response (F).

6. The apparatus according to Claim 5, **characterized in that** it comprises acquisition means (15) for acquiring values (E) measured by the photodetector module (12), and processing means (16) for processing values (D) acquired by said acquisition means (15), which are configured for processing said acquired values (D), representing said fluorescence response (F), and obtaining values of temperature ($T_p$) Z of said sliding end portion (21).

7. The apparatus according to Claim 5, **characterized in that** it comprises acquisition means (15) for acquiring values (E) measured by the photodetector module (12), and processing means (16) for processing values (D) acquired by said acquisition means (15), which are configured for processing said acquired values (D) representing said fluorescence response (F), and for processing a supplied value of resistance of the thermistor (25), to obtain corresponding values of temperature ($T_p$) of the sliding portion (21) and of temperature of the thermistor ($T_t$), said apparatus (10) comprising a neural network (100) configured for obtaining values of temperature ($T_i$) of an interface between the sliding end portion (21) and the surface (30) of a material under test as a function of said values of temperature ($T_p$) of the sliding portion (21) and of temperature of the thermistor ($T_t$).

8. The apparatus according to Claim 6 or Claim 7, **characterized in that** it comprises means (40; 45) for setting in contact, with a given force, said probe (20) with the surface (30) of a material under test and means for measuring a deflection of the probe (20) during said contact.

9. The apparatus according to Claim 6 or Claim 7, **characterized in that** said surface (30) of a material under test is moved by sliding via rotation or via a system of linear translation.

10. A method for measuring tribological properties of materials, comprising the operation of sliding a punch probe (20) over the surface (30) of a material under test, and of detecting a temperature of interface ($T_i$) between the sliding end portion (21) and the surface (30) of a material under test, said method being **characterized in that** an apparatus according to any one of Claims 5 to 9 is used.

11. The method according to Claim 10, **characterized in that** it comprises the following operations:

- driving sliding of the sliding portion (21) over the surface (30) of the material;
- acquiring values of deflection of the probe (20), which are due to friction and are measured by the apparatus

(10), in particular via a load cell (45);
- controlling the laser source (11) so that it will send a series of laser-radiation pulses (L) through the probe (20);
- acquiring from the probe (20) the fluorescence response (F);
- processing said fluorescence response (F) to obtain a fluorescent decay time ($\tau$); and
- calculating, from said fluorescent decay time ($\tau$) obtained, a corresponding temperature ($T_p$) of the sliding portion (21) to which said fluorescent decay time ($\tau$) is associated.

**12.** The method according to Claim 10, **characterized in that** it comprises the following operations:

- driving sliding of the sliding portion (21) over the surface (30) of the material;
- acquiring values of deflection of the probe (20), which are due to friction and are measured by the apparatus (10), in particular via a load cell (45);
- controlling the laser source (11) so that it will send a series of laser-radiation pulses (L) through the probe (20);
- acquiring from the probe (20) the fluorescence response (F) and a value of resistance measured by the thermistor (25);
- processing said fluorescence response (F) to obtain a fluorescent decay time ($\tau$);
- calculating, from said fluorescent decay time ($\tau$) obtained, a corresponding temperature ($T_p$) of the sliding portion (21) to which said fluorescent decay time ($\tau$) is associated;
- calculating, starting from the value of resistance measured by the thermistor (25), the corresponding temperature ($T_t$) ; and
- calculating a temperature of contact at the pin/surface interface ($T_i$) corrected for the measurement error, through a neural network (100) having as inputs the values of temperature ($T_p$) of the sliding portion (21) and of temperature ($T_t$) of the thermistor (25) .

**13.** The method according to any one of Claims 10 to 12, **characterized in that** the acquired values (D) of fluorescence are processed via a pre-set curve, obtained via a separate calibration procedure carried out on said sliding portion (21).

## Patentansprüche

**1.** Sonde (20) zum Messen tribologischer Eigenschaften von Materialien, die einen Stempel umfasst, der einen Tragekörper (22) einschließt, der mit einem gleitenden Endabschnitt (21) verbunden ist, der zum Gleiten über die Oberfläche (30) eines zu prüfenden Materials ausgeführt ist, wobei die Sonde eine Erfassungsvorrichtung umfasst, die an ihrem Ausgang eine Größe (F) liefert, die eine Funktion der Temperatur (Ti) einer Grenzfläche zwischen dem gleitenden Endabschnitt (21) und der Oberfläche (30) eines zu prüfenden Materials ist,
wobei die Sonde **dadurch gekennzeichnet ist, dass**:

der gleitende Endabschnitt (21), der zum Gleiten über die Oberfläche (30) eines zu prüfenden Materials ausgeführt ist, teilweise oder vollständig aus fluoreszierendem Material besteht,
die Erfassungsvorrichtung, die an ihrem Ausgang eine Größe (F) liefert, die eine Funktion der Temperatur ($T_i$) einer Grenzfläche zwischen dem gleitenden Endabschnitt (21) und der Oberfläche (30) eines zu prüfenden Materials ist, eine optische Einrichtung (14) umfasst, mit der in den gleitenden Endabschnitt (21) eine Strahlung (L), insbesondere eine Laserstrahlung, eingeleitet wird, die in der Lage ist, eine Fluoreszenzreaktion (F) des gleitenden Endabschnitts (21) anzuregen, und
die Sonde des Weiteren eine optische Einrichtung (14) umfasst, mit der die Fluoreszenzreaktion (F) gesammelt und zu einer optischen Einrichtung (12) zum Erfassen der Fluoreszenzreaktion (F) geleitet wird.

**2.** Sonde nach Anspruch 1, **dadurch gekennzeichnet, dass** das fluoreszierende Material Rubin ist.

**3.** Sonde nach Anspruch 1 oder Anspruch 2, **dadurch gekennzeichnet, dass** die optische Einrichtung (14), mit der die Anregungs-Strahlung (L) geleitet wird, und die optische Einrichtung (14), mit der die Fluoreszenzreaktion (F) gesammelt und zu der optischen Erfassungseinrichtung (12) geleitet wird, ein und dieselbe optische Faser umfassen, die im Inneren des Tragekörpers (22) positioniert ist und deren eines Ende in den gleitenden Abschnitt (21) eingeführt ist.

**4.** Sonde nach einem der vorhergehenden Ansprüche, **dadurch gekennzeichnet, dass** sie einen Temperatursensor (25), insbesondere einen Thermistor, umfasst, der in der Nähe des gleitenden Abschnitts (21) positioniert ist.

5. Vorrichtung (10) zum Messen tribologischer Eigenschaften von Materialien, die eine Sonde nach einem der Ansprüche 1 bis 4 umfasst, **dadurch gekennzeichnet, dass** sie umfasst:

eine Laser-Quelle (11) zum Emittieren der Anregungs-Strahlung (L) und optische Kopplungseinrichtungen (17a, 17b, 13) zum Koppeln der Anregungs-Strahlung (L) zu der Leiteinrichtung (14) der Sonde (20), sowie ein Photodetektor-Modul (12) zum Erfassen der Fluoreszenzreaktion (F) und optische Kopplungseinrichtungen (18a, 18b, 13) zum Koppeln des Photodetektor-Moduls (12) zu der optischen Einrichtung (14) zum Sammeln und Leiten der Fluoreszenzreaktion (F).

6. Vorrichtung nach Anspruch 5, **dadurch gekennzeichnet, dass** sie eine Erfassungseinrichtung (15), mit der durch das Photodetektor-Modul (12) gemessene Werte (E) erfasst werden, und eine Verarbeitungseinrichtung (16) zum Verarbeiten durch die Erfassungseinrichtung (15) erfasster Werte (D) umfasst, die zum Verarbeiten der erfassten Werte (D), die die Fluoreszenzreaktion (F) repräsentieren, sowie zum Ermitteln von Werten einer Temperatur ($T_p$) des gleitenden Endabschnitts (21) ausgeführt ist.

7. Vorrichtung nach Anspruch 5, **dadurch gekennzeichnet, dass** sie eine Erfassungseinrichtung (15), mit der durch das Photodetektor-Modul (12) gemessene Werte (E) erfasst werden, sowie eine Verarbeitungseinrichtung (16) umfasst, mit der durch die Erfassungseinrichtung (15) erfasste Werte (D) verarbeitet werden und die so ausgeführt ist, dass sie die erfassten Werte (D), die die Fluoreszenzreaktion (F) repräsentieren, und einen zugeführten Wert von Widerstand des Thermistors (25) verarbeitet, um entsprechende Werte einer Temperatur ($T_p$) des gleitenden Abschnitts (21) und einer Temperatur ($T_t$) des Thermistors zu ermitteln, wobei die Vorrichtung (10) ein neuronales Netzwerk (100) umfasst, das so ausgeführt ist, dass es Werte einer Temperatur ($T_i$) einer Grenzfläche zwischen dem gleitenden Endabschnitt (21) und der Oberfläche (30) eines zu prüfenden Materials als eine Funktion der Werte einer Temperatur ($T_p$) des gleitenden Abschnitts (21) und einer Temperatur ($T_t$) des Thermistors ermittelt.

8. Vorrichtung nach Anspruch 6 oder Anspruch 7, **dadurch gekennzeichnet, dass** sie Einrichtungen (40; 45), mit denen die Sonde (20) mit einer vorgegebenen Kraft in Kontakt mit der Oberfläche (30) eines zu prüfenden Materials gebracht wird, und Einrichtungen umfasst, mit denen eine Auslenkung der Sonde (20) während des Kontakts gemessen wird.

9. Vorrichtung nach Anspruch 6 oder Anspruch 7, **dadurch gekennzeichnet, dass** die Oberfläche (30) eines zu prüfenden Materials durch Gleiten mittels Drehung oder mittels eines Systems linearer Translation bewegt wird.

10. Verfahren zum Messen tribologischer Eigenschaften von Materialien, das den Vorgang des Gleitens einer Stempel-Sonde (20) über die Oberfläche (30) eines zu prüfenden Materials und des Erfassens einer Temperatur ($T_i$) einer Grenzfläche zwischen dem gleitenden Endabschnitt (21) und der Oberfläche (30) eines zu prüfenden Materials umfasst, wobei das Verfahren **dadurch gekennzeichnet ist, dass** eine Vorrichtung nach einem der Ansprüche 5 bis 9 eingesetzt wird.

11. Verfahren nach Anspruch 10, **dadurch gekennzeichnet, dass** es die folgenden Vorgänge umfasst:

Antreiben zum Gleiten des gleitenden Abschnitts (21) über die Oberfläche (30) des Materials, Erfassen von Werten der Auslenkung der Sonde (20), die auf Reibung zurückzuführen sind und von der Vorrichtung (10), insbesondere mittels einer Kraftmesszelle (45), gemessen werden, Steuern der Laser-Quelle (11), so dass sie eine Reihe von Laserstrahlungs-Impulsen (L) durch die Sonde (20) sendet;
Erfassen der Fluoreszenzreaktion (F) von der Sonde (20);
Verarbeiten der Fluoreszenzreaktion (F), um eine Fluoreszenz-Abklingzeit (T) zu ermitteln, und
Berechnen einer entsprechenden Temperatur ($T_p$) des gleitenden Abschnitts (21), mit der die Fluoreszenz-Abklingzeit (T) zusammenhängt, anhand der ermittelten Fluoreszenz-Abklingzeit (T).

12. Verfahren nach Anspruch 10, **dadurch gekennzeichnet, dass** es die folgenden Vorgänge umfasst:

Antreiben zum Gleiten des gleitenden Abschnitts (21) über die Oberfläche (30) des Materials, Erfassen von Werten der Auslenkung der Sonde (20), die auf Reibung zurückzuführen sind und von der Vorrichtung (10), insbesondere mittels einer Kraftmesszelle (45), gemessen werden, Steuern der Laser-Quelle (11), so dass sie eine Reihe von Laserstrahlungs-Impulsen (L) durch die Sonde (20) sendet;
Erfassen der Fluoreszenzreaktion (F) von der Sonde (20) und eines durch den Thermistor (25) gemessenen Widerstandswertes;

Verarbeiten der Fluoreszenzreaktion (F), um eine Fluoreszenz-Abklingzeit (T) zu ermitteln; und

Berechnen, einer entsprechenden Temperatur ($T_p$) des gleitenden Abschnitts (21), mit der die Fluoreszenz-Abklingzeit (T) zusammenhängt, anhand der ermittelten Fluoreszenz-Abklingzeit (T);

Berechnen der entsprechenden Temperatur ($T_t$) ausgehend von dem durch den Thermistor (25) gemessenen Widerstandswert; und

Berechnen einer um den Messfehler korrigierten Kontakttemperatur ($T_i$) an der Grenzfläche von Stift und Oberfläche, mittels eines neuronalen Netzwerks (100), das als Eingänge die Werte der Temperatur ($T_p$) des gleitenden Abschnitts (21) und der Temperatur ($T_t$) des Thermistors (25) hat.

13. Verfahren nach einem der Ansprüche 10 bis 12, **dadurch gekennzeichnet, dass** die erfassten Werte (D) der Fluoreszenz mittels einer voreingestellten Kurve verarbeitet werden, die über ein separates Kalibrierungsverfahren ermittelt wird, das an dem gleitenden Abschnitt (21) ausgeführt wird.

## Revendications

1. Sonde (20) pour mesurer des propriétés tribologiques de matériaux, comprenant un poinçon, qui inclut un corps de support (22) associé à une portion d'extrémité coulissante (21) configurée pour coulisser sur la surface (30) d'un matériau sous test, ladite sonde comprenant un dispositif de détection qui fournit à la sortie une quantité (F) qui est une fonction de la température ($T_i$) d'une interface entre la portion d'extrémité coulissante (21) et la surface (30) d'un matériau sous test,

   ladite sonde étant **caractérisée en ce que** :

   ladite partie d'extrémité coulissante (21) configurée pour coulisser sur la surface (30) d'un matériau sous test est partiellement ou totalement constituée de matériau fluorescent,

   le dispositif de détection, qui fournit à la sortie une quantité (F) qui est une fonction de la température ($T_i$) d'une interface entre la portion d'extrémité coulissante (21) et la surface (30) d'un matériau sous test et comprend un moyen optique (14) pour acheminer, dans ladite portion d'extrémité coulissante (21), un rayonnement (L) qui peut exciter une réponse de fluorescence (F) de ladite portion d'extrémité coulissante (21), en particulier un rayonnement laser, et

   la sonde comprend de plus un moyen optique (14) pour recueillir ladite réponse de fluorescence (F) et l'acheminer vers un moyen optique (12) pour détecter ladite réponse de fluorescence (F).

2. Sonde selon la revendication 1, **caractérisée en ce que** ledit matériau fluorescent est du rubis.

3. Sonde selon la revendication 1 ou revendication 2, **caractérisée en ce que** ledit moyen optique (14) pour acheminer ledit rayonnement d'excitation (L) et ledit moyen optique (14) pour recueillir ladite réponse de fluorescence (F) et l'acheminer jusqu'audit moyen de détection optique (12) comprennent une et même fibre optique, laquelle est positionnée dans le corps de support (22) et dont une extrémité est insérée dans la portion coulissante (21).

4. Sonde selon l'une quelconque des revendications précédentes, **caractérisée en ce qu'**elle comprend un capteur de température (25), en particulier une thermistance, positionnée à proximité de ladite portion coulissante (21).

5. Appareil (10) pour la mesure de propriétés tribologiques de matériaux, comprenant une sonde selon l'une quelconque des revendications 1 à 4, **caractérisé en ce qu'**il comprend :

   une source laser (11) pour émettre ledit rayonnement d'excitation (L) et un moyen de couplage optique (17a, 17b, 13) pour coupler ledit rayonnement d'excitation (L) audit moyen d'acheminement (14) de ladite sonde (20), et un module de photodétecteur (12) pour détecter ladite réponse de fluorescence (F) et un moyen de couplage optique (18a, 18b, 13) pour coupler ledit module de photodétecteur (12) audit moyen optique (14) pour recueillir et acheminer ladite réponse de fluorescence (F).

6. Appareil selon la revendication 5, **caractérisé en ce qu'**il comprend un moyen d'acquisition (15) pour acquérir des valeurs (E) mesurées par le module de photodétecteur (12), et un moyen de traitement (16) pour traiter des valeurs (D) acquises par ledit moyen d'acquisition (15), qui sont configurés pour traiter lesdites valeurs acquises (D), représentant ladite réponse de fluorescence (F), et obtenant des valeurs de températures ($T_p$) de ladite portion d'extrémité coulissante (21).

**7.** Appareil selon la revendication 5, **caractérisé en ce qu'**il comprend un moyen d'acquisition (15) pour acquérir des valeurs (E) mesurées par le module de photodétecteur (12), et un moyen de traitement (16) pour traiter des valeurs (D) acquises par ledit moyen d'acquisition (15), qui sont configurés pour traiter lesdites valeurs acquises (D) représentant ladite réponse de fluorescence (F), et pour traiter une valeur introduite de résistance de la thermistance (25), pour obtenir des valeurs correspondantes de température ($T_p$) de la portion coulissante (21) et de température de la thermistance ($T_t$), ledit appareil (10) comprenant un réseau neuronal (100) configuré pour obtenir des valeurs de température ($T_i$) d'une interface entre la portion d'extrémité coulissante (21) et la surface (30) d'un matériau sous test comme une fonction desdites valeurs de température ($T_p$) de la portion coulissante (21) et de température de la thermistance ($T_t$).

**8.** Appareil selon la revendication 6 ou revendication 7, **caractérisé en ce qu'**il comprend un moyen (40 ; 45) pour mettre en contact, avec une force donnée, ladite sonde (20) avec la surface (30) d'un matériau sous test et un moyen pour mesurer une déflection de la sonde (20) pendant ledit contact.

**9.** Appareil selon la revendication 6 ou revendication 7, **caractérisé en ce que** ladite surface (30) d'un matériau sous test est déplacée par coulissage via une rotation ou via un système de translation linéaire.

**10.** Procédé de mesure de propriétés tribologiques de matériaux, comprenant l'opération de coulissage d'une sonde à poinçon (20) sur la surface (30) d'un matériau sous test, et de détection d'une température d'interface ($T_i$) entre la portion d'extrémité coulissante (21) et la surface (30) d'un matériau sous test, ledit procédé étant **caractérisé en ce qu'**un appareil selon l'une quelconque des revendications 5 à 9 est utilisé.

**11.** Procédé selon la revendication 10, **caractérisé en ce qu'**il comprend les opérations suivantes :

- entraînement de coulissage de la portion coulissante (21) sur la surface (30) du matériau ;
- acquisition de valeurs de déflection de la sonde (20), lesquelles sont dues à une friction et sont mesurées par l'appareil (10), en particulier via une cellule de charge (45) ;
- contrôle de la source laser (11) de sorte qu'elle enverra une série d'impulsions de radiation laser (L) à travers la sonde (20) ;
- acquisition à partir de la sonde (20) de la réponse de fluorescence (F) ;
- traitement de ladite réponse de fluorescence (F) pour obtenir une durée de déclin de fluorescence ($\tau$) ; et
- calcul, à partir de ladite durée de déclin de fluorescence ($\tau$) obtenue, d'une température correspondante ($T_p$) de la portion coulissante (21) à laquelle ladite durée de déclin de fluorescence ($\tau$) est associée.

**12.** Procédé selon la revendication 10, **caractérisé en ce qu'**il comprend les opérations suivantes :

- entraînement de coulissage de la portion coulissante (21) sur la surface (30) du matériau ;
- acquisition de valeurs de déflection de la sonde (20), lesquelles sont dues à une friction et sont mesurées par l'appareil (10), en particulier via une cellule de charge (45) ;
- contrôle de la source laser (11) de sorte qu'elle enverra une série d'impulsions de radiation laser (L) à travers la sonde (20) ;
- acquisition à partir de la sonde (20) de la réponse de fluorescence (F) et d'une valeur de résistance mesurée par la thermistance (25) ;
- traitement de ladite réponse de fluorescence (F) pour obtenir une durée de déclin de fluorescence ($\tau$) ;
- calcul, à partir de ladite durée de déclin de fluorescence ($\tau$) obtenue, d'une température correspondante ($T_p$) de la portion coulissante (21) à laquelle ladite durée de déclin de fluorescence ($\tau$) est associée ;
- calcul, à partir de la valeur de résistance mesurée par la thermistance (25), de la température correspondante ($T_p$) ; et
- calcul d'une température de contact à l'interface pointe/surface ($T_i$) corrigée pour l'erreur de mesure, par un réseau neuronal (100) présentant comme entrées les valeurs de température ($7_p$) de la portion coulissante (21) et de température ($T_t$) du thermistance (25).

**13.** Procédé selon l'une quelconque des revendications 10 à 12, **caractérisé en ce que** les valeurs acquises (D) de fluorescence sont traitées via une courbe pré-établie, obtenue via une procédure de calibration séparée réalisée sur ladite portion coulissante (21).

Fig. 1

Fig. 2

*Fig. 3*

Fig. 4

*Fig. 5*

*Fig. 6*

EP 3 607 300 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9703346 A1

- FR 2849185 A1

### Non-patent literature cited in the description

- Multi-channel Optical Fiber Thermometer for PEM Fuel-Cell Applications. **ROSSO L et al.** INTERNATIONAL JOURNAL OF THERMOPHYSICS ; JOURNAL OF THERMOPHYSICAL PROPERTIES AND THERMOPHYSICS AND ITS APPLICATIONS. KLUWER ACADEMIC PUBLISHERS-CONSULTANTS BUREAU, 28 April 2011, vol. 32, 1440-1447